Europäisches Patentamt

European Patent Office

Office européen des brevets

(11) Veröffentlichungsnummer: **0 476 438 A2**

## EUROPÄISCHE PATENTANMELDUNG

(21) Anmeldenummer: **91114974.8**

(22) Anmeldetag: **05.09.91**

(51) Int. Cl.5: **H01B 5/08**, H01B 11/22

(30) Priorität: **17.09.90 DE 9013175 U**

(43) Veröffentlichungstag der Anmeldung:
**25.03.92 Patentblatt 92/13**

(84) Benannte Vertragsstaaten:
**AT BE CH DE DK ES FR GB LI LU NL SE**

(71) Anmelder: **Felten & Guilleaume
Energietechnik AG
Schanzenstrasse 24-30 Postfach 80 50 01
W-5000 Köln 80(DE)**

(72) Erfinder: **Bausch, Joachim, Dr.-Ing.
Auf den Rotten 44a
W-5253 Lindlar(DE)**

(54) Elektro-optisches Freileiterseil mit 24 und mehr Lichtwellenleitern.

(57) Das elektro-optische Freileiterseil ist aus runden Verseilelementen wie folgt aufgebaut: a) Um das Kernelement (K) ist mindestens eine Lage von hauptsächlich zugfesten Drähten (D1), und darüber ist mindestens eine Lage (D2) von hauptsächlich elektrisch leitenden Drähten verseilt, b) das Kernelement (K) besteht aus einem Stahldraht mit einem Durchmesser um 2,5 mm oder aus einem zugfesten Kunststoffstrang mit einem Durchmesser um 5 mm, und c) in der ersten Drahtlage (D1) über dem Kernelement sind mindestens zwei Drähte in symmetrischer Anordnung durch je ein Edelstahlröhrchen (R) mit einem Außendurchmesser um 2,5 mm ersetzt, in das mindestens 12 Lichtwellenleiter (L) eingelegt sind. - Bei einer anderen Ausführungsform besteht das Kernelement aus einem Edelstahlröhrchen mit einem Außendurchmesser um 5 mm, in das mindestens 24 Lichtwellenleiter eingelegt sind. Beide Ausführungsformen können auch miteinander kombiniert werden.

FIG.3

Die Erfindung betrifft ein elektro-optisches Freileiterseil, das aus runden Verseilelementen wie folgt aufgebaut ist: Um das Kernelement ist mindestens eine Lage von hauptsächlich zugfesten Drähten, und darüber ist mindestens eine Lage von hauptsächlich elektrisch leitenden Drähten verseilt, und in dem Seil ist mindestens pin Verseilelement durch ein Edelstahlröhrchen ersetzt, in dem mehrere Lichtwellenleiter (LWL) lose und mit überlänge angeordnet und von einem Gel umgeben sind (LWL-Röhrchen). Ein solches elektro-optisches-Freileiterseil ist aus der Druckschrift DE 90 01 893 U1 bekannt.

Nun sind auch elektro-optische Freileiterseile und Kabel bekannt, bei denen nicht mehrere kleinere LWL-Röhrchen (mit einem Durchmesser im mm-Bereich) in einer der Drahtlagen um den Kern angeordnet sind, sondern der Kern selbst als größeres LWL-Röhrchen ausgebildet ist.

So ist in der DE 38 04 419 A1 ein Hochspannungskabel mit integrierten optischen übertragungselementen beschrieben, dessen Kern aus einer LWL-Bündelader mit etwa 15 LWL besteht, die in vernetztem Silikon eingebettet und von einem rohrförmigen Element umgeben sind, das von drei nichtmetallischen Schläuchen gebildet wird. Darum ist eine Lage von Stahldrähten, und darüber sind zwei Lagen von Aluminiumdrähten verseilt. Die Erfindung betrifft hier hauptsächlich das LWL-Rohr in der Form von drei nichtmetallischen Schläuchen.

Ferner ist in der EP 0 371 660 A1 ein elektroopto-mechanisches Kabel für faseroptische übertragungssysteme beschrieben, das speziell für den Einsatz in der Tiefsee ausgebildet ist. Dieses elektro-optische Seekabel, das mehr als 20 Lichtwellenleiter enthält, hat folgenden Aufbau: Bis etwa 20 LWL sind lose in ein Gel eingebettet und von einem Röhrchen aus rostfreiem Stahl umgeben, dessen Durchmesser um 1,25 mm und dessen Wandstärke um 0,125 mm beträgt. Um dieses Röhrchen ist eine Lage von Leitmaterial-Drähte verseilt, worin mehrere Drähte durch Je ein ähnliches Röhrchen mit einigen wenigen LWL ersetzt sind. Darüber ist ein Dielektrikum extrudiert, das einen mehrfachen Durchmesser des elektro-optischen Elements hat, und in das zwei Lagen Stahldrähte als Kabelbewehrung eingebettet sind. Die Erfindung betrifft hier den gesamten Aufbau des elektro-optischen Tiefseekabels.

Des weiteren sind aber auch elektro-optische Freileiterseile und Kabel bekannt, bei denen die Lichtwellenleiter um ein Kernelement herum verseilt sind, das aus vollem Material und mit einem größeren Durchmesser (von über 5 mm) ausgebildet ist, und das als Zug- und Stützelement dient.

So ist in der DE 35 35 827 A1 ein Freileitungskabel für elektrische und optische übertragung beschrieben, das mehr als 30 Lichtwellenleiter enthält und wie folgt aufgebaut ist: Das Zentralelement wird von einem Stahldraht gebildet, der einen GFK-Mantel hat (GFK = glasfaserverstärkter Kunststoff) hat. Darum sind 6 LWL-Kabel mit je 6 LWL verseilt und in eine weiche Füllung aus Kunstharz eingebettet. Dies wird umschlossen von einer starren rohrförmigen Füllung aus Kunstharz und darüber einem stabilen metallenen Rohr. Darüber ist eine Lage kräftiger Leitmaterial-Drähte verseilt. Die hier eingesetzten LWL-Kabel haben von innen nach außen folgenden Aufbau: Kern Stahl- oder GFK-Draht, darum 6 LWL je lose in einer Hülle, weiche Füllung, starre Hülle (Rohr). Die Erfindung betrifft hier hauptsächlich die Ausbildung der Füllungen.

Der Erfindung liegt die Aufgabe zugrunde, weitere vorteilhafte Konstruktionen von elektro-optischen Freileiterseilen anzugeben, bei denen die Anzahl der Lichtwellenleiter 24 und mehr ist.

Diese Aufgabe wird, ausgehend von einem elektro-optischen Freileiterseil, wie es in der DE 90 01 893 U1 beschrieben ist, erfindungsgemäß dadurch gelöst, daß

a) das Kernelement aus einem Stahldraht mit einem Durchmesser um 2,5 mm (1,5 bis 4 mm) oder aus einem zugfesten Kunststoffstrang mit einem Durchmesser um 5 mm (3 bis 8 mm) besteht,

b) darum mindestens eine Lage von stahl-ummantelten Aluminiumdrähten oder von Drähten aus einer Aluminiumlegierung mit einem Durchmesser um 2,5 mm (1,5 bis 4 mm), und darüber mindestens eine Lage von Aluminiumdrähten mit einem größeren Durchmesser verseilt ist, und

c) in der ersten Drahtlage über dem Kernelement mindestens zwei Drähte in symmetrischer Anordnung durch je ein Edelstahlröhrchen mit einem Außendurchmesser um 2,5 mm (1,5 bis 4 mm) ersetzt sind, in das mindestens 12 Lichtwellenleiter eingelegt sind.

Eine andere Ausführungsform der Erfindung besteht darin, daß das Kernelement aus einem Edelstahlröhrchen mit einem Außendurchmesser um 5 mm (3 bis 8 mm) besteht, in das mindestens 24 Lichtwellenleiter eingelegt sind, und daß darum mindestens eine Lage von stahl-ummantelten Aluminiumdrähten oder von Drähten aus einer Aluminiumlegierung mit einem Durchmesser um 2,5 mm (1,5 bis 4 mm), und darüber mindestens eine Lage von Aluminiumdrähten mit einem größeren Durchmesser verseilt ist.

Der Vorteil der Erfindung besteht darin, daß man ein elektro-optisches-Freileiterseil erhält, bei dem die Anzahl der LWL und damit die übertragungskapazität wesentlich erhöht, und trotzdem das Freileiterseil aufs äußerste einfach ausgebildet ist.

Drei Ausführungsbeispiele des erfindungsgemäßen elektro-optischen Freileiterseils sind in der Zeichnung im Querschnitt dargestellt und werden nachfolgend erläutert. Es zeigen

- Fig. 1 ein Seil mit einem Stahldraht von 2,5 mm Durchmesser im Seilkern und 3 LWL-Röhrchen in der ersten Drahtlage,
- Fig. 2 ein Seil mit einem LWL-Röhrchen von 5 mm Außendurchmesser im Seilkern, und
- Fig. 3 ein Seil mit einem zugfesten Kunststoffstrang von 5 mm Durchmesser im Seilkern und 6 LWL-Röhrchen in der ersten Drahtlage.

Bezeichnet sind mit:

K     Kernelement
D1    erste Drahtlage um das Kernelement
D2    zweite Drahtlage
R     Röhrchen aus Edelstahl (LWL-Röhrchen)
L     Lichtwellenleiter im Röhrchen
LB    LWL-Bündel
B     Bandage aus Kevlar um das Röhrchen.

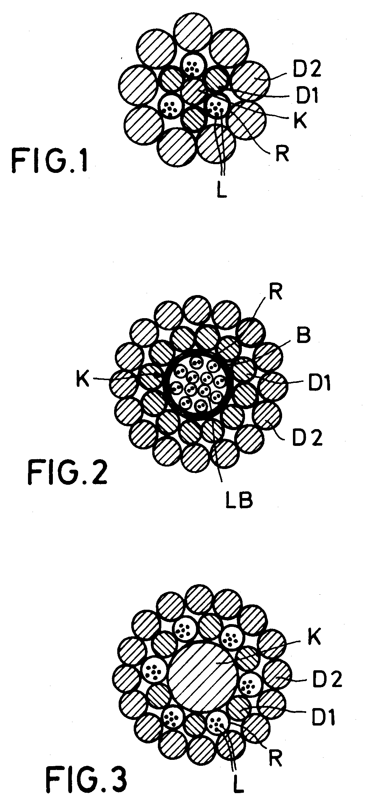

Fig. 1 zeigt ein elektro-optisches Freileiterseil mit folgendem Aufbau: Das Kernelement K besteht aus einem Stahldraht mit einem Durchmesser von 2,5 mm, die erste Lage D1 aus stahl-ummantelten Aluminiumdrähten (Durchmesser 2,5 mm), und die zweite Lage D2 aus Aluminiumdrähten. In der ersten Lage D1 sind 3 Drähte durch je ein Edelstahlröhrchen R mit einem Außendurchmesser von 2,5 mm ersetzt, in das mindestens 12 Lichtwellenleiter L eingelegt sind.

Fig. 2 zeigt ein elektro-optisches-Freileiterseil mit folgendem Aufbau: Das Kernelement K besteht hier aus einem Edelstahlröhrchen R mit einem Außendurchmesser von 5 mm, in das 12, 18 oder 24 Lichtwellenleiter-(LWL-)Bündeladern LB eingelegt sind, wovon jede aus zwei miteinander reversierend verseilten LWL besteht. Um dieses Kernelement ist eine erste Lage D1 von stahl-ummantelten Aluminiumdrähten und darüber eine zweite Lage D2 von Aluminiumdrähten verseilt.

Zur Erhöhung der Kurzschlußtemperatur des Freileiterseils ist auf dem LWL-Röhrchen R eine Bandage B aus Kevlar aufgebracht (überlappend gewickelt). Kevlar ist eine Handelsmarke der Fa. Dupont Corp. für ein aromatisches Polyamid.

Das LWL-Röhrchen R ist bevorzugt glatt, bei größerem Durchmesser eventuell wendelförmig gewellt, ausgebildet. Seine Wandstärke beträgt 0,2 bis 0,5 mm. Wie üblich, ist das Röhrchen aus einem Band längsgeformt und längsgeschweißt, und sind die LWL zum Dehnungsausgleich bei einer Temperaturänderung mit überlänge in das Röhrchen eingelegt und in ein Gel eingebettet.

Fig. 3 zeigt ein elektro-optisches-Freileiterseil mit folgendem Aufbau: Das Kernelement K besteht aus einem zugfesten Strang aus Kevlar mit einem Durchmesser von 5 mm, die erste Lage D1 aus Drähten aus einer Aluminiumlegierung (Durchmesser 2,5 mm) und die zweite Lage D2 aus Aluminiumdrähten. In der ersten Lage D1 sind 6 Drähte durch je ein Edelstahlröhrchen R mit einem Außendurchmesser von 2,5 mm ersetzt, in das mindestens 12 Lichtwellenleiter L eingelegt sind.

Die Fig. 1 und 3 zeigen die eine Ausführungform der Freileiterseile, nämlich Seile mit einem Kernelement aus vollem Material. Dagegen zeigt Fig. 2 die andere Form, nämlich ein Seil mit einem rohrförmigen Kernelement. Beide Formen können auch miteinander kombiniert werden, beispielsweise: Das Kernelement besteht aus einem großen Edelstahlröhrchen (Durchmesser 5 mm), in das 24 Lichtwellenleiter eingelegt sind, und in der ersten Drahtlage um das Kernelement sind mindestens 2 Drähte durch je ein kleines Edelstahlröhrchen (Durchmesser 2,5 mm) ersetzt, in das 12 LWL eingelegt sind.

**Patentansprüche**

1. Elektro-optisches Freileiterseil, das aus runden Verseilelementen wie folgt aufgebaut ist:
   - Um das Kernelement ist mindestens eine Lage von hauptsächlich zugfesten Drähten, und darüber ist mindestens eine Lage von hauptsächlich elektrisch leitenden Drähten verseilt,
   - und in dem Seil ist mindestens ein Verseilelement durch ein Edelstahlröhrchen ersetzt, in das mehrere Lichtwellenleiter (LWL) lose und mit überlänge eingelegt und von einem Gel umgeben sind (LWL-Röhrchen), **dadurch gekennzeichnet,**
   - daß das Kernelement (K) aus einem Stahldraht mit einem Durchmesser um 2,5 mm oder aus einem zugfesten Kunststoffstrang mit einem Durchmesser um 5 mm besteht,
   - daß darum mindestens eine Lage (D1) von stahl-ummantelten Aluminiumdrähten oder von Drähten aus einer Aluminiumlegierung mit einem Durchmesser um 2,5 mm, und darüber mindestens eine Lage (D2) von Aluminiumdrähten mit einem größeren Durchmesser verseilt ist,
   - und daß in der ersten Drahtlage (D1) über dem Kernelement mindestens zwei Drähte in symmetrischer Anordnung durch je ein Edelstahlröhrchen (R) mit einem Außendurchmesser um 2,5 mm ersetzt sind, in das mindestens 12 Lichtwellenleiter (L) eingelegt sind.

2. Elektro-optisches Freileiterseil nach Anspruch 1, **dadurch gekennzeichnet,**
   - daß das Kernelement (K) aus einem Stahldraht mit einem Durchmesser um 2,5 mm, die erste Lage (D1) aus stahl-ummantelten Aluminiumdrähten, und die zweite Lage (D2) aus Aluminiumdrähten besteht,

- und in der ersten Lage (D1) 3 Drähte durch je ein Edelstahlröhrchen (R) mit einem Außendurchmesser um 2,5 mm ersetzt sind, in das mindestens 12 Lichtwellenleiter (L) eingelegt sind (Fig. 1).

3. Elektro-optisches Freileiterseil nach Anspruch 1, **dadurch gekennzeichnet**,
   - daß das Kernelement (K) aus einem zugfesten Strang aus einem aromatischen Polyamid mit einem Durchmesser um 5 mm, die erste Lage (D1) aus Drähten aus einer Aluminiumlegierung und die zweite Lage (D2) aus Aluminiumdrähten besteht,
   - und in der ersten Lage (D1) 6 Drähte durch je ein Edelstahlröhrchen (R) mit einem Außendurchmesser um 2,5 mm ersetzt sind, in das mindestens 12 Lichtwellenleiter (L) eingelegt sind (Fig. 3).

4. Elektro-optisches Freileiterseil, das aus runden Verseilelementen wie folgt aufgebaut ist:
   - Um das Kernelement ist mindestens eine Lage von hauptsächlich zugfesten Drähten, und darüber ist mindestens eine Lage von hauptsächlich elektrisch leitenden Drähten verseilt,
   - und in dem Seil ist mindestens ein Verseilelement durch ein Edelstahlröhrchen ersetzt, in das mehrere Lichtwellenleiter (LWL) lose und mit überlänge eingelegt und von einem Gel umgeben sind (LWL-Röhrchen), **dadurch gekennzeichnet**,
   - daß das Kernelement (K) aus einem Edelstahlröhrchen (R) mit einem Außendurchmesser um 5 mm besteht, in das mindestens 24 Lichtwellenleiter (L) eingelegt sind,
   - und daß darum mindestens eine Lage (D1) von stahl-ummantelten Aluminiumdrähten oder von Drähten aus einer Aluminiumlegierung mit einem Durchmesser um 2,5 mm, und darüber mindestens eine Lage (D2) von Aluminiumdrähten mit einem größeren Durchmesser verseilt ist.

5. Elektro-optisches Freileiterseil nach Anspruch 4, **dadurch gekennzeichnet**,
   - daß das Kernelement (K) aus einem Edelstahlröhrchen (R) mit einem Außendurchmesser um 5 mm besteht, in das 12, 18 oder 24 Lichtwellenleiter-(LWL-)Bündeladern (LB) eingelegt sind, wovon jede aus zwei miteinander reversierend verseilten LWL besteht,
   - und daß darum eine erste Lage (D1) von stahl-ummantelten Aluminiumdrähten und darüber eine zweite Lage (D2) von Aluminiumdrähten verseilt ist (Fig. 2).

6. Elektro-optisches Freileiterseil nach Anspruch 4 oder 5, **dadurch gekennzeichnet**, daß um das Edelstahlröhrchen (R) eine Bandage (B) aus einem aromatischen Polyamid gewickelt ist.

7. Elektro-optisches Freileiterseil nach einem der Ansprüche 4 bis 6, **dadurch gekennzeichnet**, daß in der ersten Drahtlage (D1) über dem Kernelement mindestens 2 Drähte in symmetrischer Anordnung durch je ein Edelstahlröh-chen (R) mit einem Außendurchmesser um 2,5 mm ersetzt sind, in das mindestens 12 Licht-wellenleiter (L) eingelegt sind.

...

FIG.1

FIG.2

FIG.3